# EUROPÄISCHE PATENTSCHRIFT

(11) **EP 3 737 865 B1**
(45) Veröffentlichungstag und Bekanntmachung des Hinweises auf die Patenterteilung: **12.03.2025**
(21) Anmeldenummer: 18833884.2
(22) Anmeldetag: 21.12.2018
(51) Int. Cl.: F04D 1/06, F04D 17/12, F04D 29/42, B22F 5/00, B33Y 80/00, F01D 25/24, F01D 25/26

(54) **TURBOMASCHINENINNENGEHÄUSE**
TURBOMACHINE INNER HOUSING
CARTER INTÉRIEUR DE TURBORÉACTEUR

(30) Priorität: 10.01.2018 DE 102018200287
(43) Veröffentlichungstag der Anmeldung: 18.11.2020
(73) Patentinhaber: Siemens Energy Global GmbH & Co. KG, 81739 München (DE)
(72) Erfinder: NASS, Dieter, 47447 Moers (DE); NEJATI-RAD, Shahouz, 47809 Krefeld (DE); SCHICKMANN, Kai, 40489 Düsseldorf (DE)
(86) Internationale Anmeldenummer: PCT/EP2018/086644
(87) Internationale Veröffentlichungsnummer: WO 2019/137804

(56) Entgegenhaltungen:
- DE-A1- 102013 225 065
- GB-A- 747 359
- JP-U- S5 417 101
- US-A- 1 050 419
- US-A- 2 017 826

## Beschreibung

Die Erfindung betrifft ein Anordnung mit einem Turbomaschineninnengehäuse, für eine Radialturbomaschine, wobei das Turbomaschineninnengehäuse eine Teilfuge entlang einer Längsachse, insbesondere einer Rotorlängsachse aufweist, derart, dass das Turbomaschineninnengehäuse in ein Unterteil und ein Oberteil aufteilbar ist, wobei das Turbomaschineninnengehäuse für eine mindestens zwei Stufen umfassende Radialturbomaschine ausgebildet ist, wobei das Turbomaschineninnengehäuse zwischen zwei Stufen jeweils eine Rückführstufe aufweist, wobei das Unterteil und/oder das Oberteil zumindest abschnittsweise mindestens zwei Stufen übergreifend einstückig ausgebildet ist.

Radialturbomaschinen der eingangs erwähnten Art mit gattungsgemäßen Turbomaschineninnengehäusen sind bereits aus den Druckschriften WO2016026825-A1, WO2010034602-A1, WO2007137959-A1 und EP1860326-A1 bekannt.

Weitere Offenbarungen zu Turbomaschinen sind in den Druckschriften US 2017826A, JP S5417101U und US 1050419A enthalten.

Aus GB 747 359 A ist eine mehrstufige Kreiselpumpe oder ein mehrstufiger Verdichter bekannt, der ein Außengehäuse und ein aus Edelstahl gefertigtes Innengehäuse aufweist.

DE 10 2013 225065 A1 offenbart ein Pumpengehäuse in Kunststoffbauweise.

Ein Turbomaschineninnengehäuse bzw. ein Innengehäuse einer Turbomaschine, insbesondere einer Radialturbomaschine, ist stets von einem Außengehäuse umgeben. Das Außengehäuse ist hierbei im Wesentlichen abgedichtet, derart, dass keine nennenswerten Mengen an Prozessfluid aus dem Außengehäuse austreten können. Sofern in dem Außengehäuse Wellendurchtritte vorgesehen sind, sind diese mittels einer Wellendichtung abgedichtet. An diesen Stellen können technisch bedingte Leckagen auftreten, die aber unerwünscht sind. Grundsätzlich kann ein Antrieb für beispielsweise einen Verdichter oder eine Pumpe auch innerhalb des Außengehäuses vorgesehen sein, sodass es keines Wellendurchtrittes bedarf. In diesem Fall ist die entsprechende Abdichtung des Außengehäuses tatsächlich hermetisch.

Eine entsprechende Turbomaschine im Sinne der Erfindung dient der Übertragung von technischer Arbeit von oder auf das Prozessfluid mittels eines Rotors, der sich entlang einer Rotationsachse erstreckt. Im axialen Verlauf des Turbomaschineninnengehäuses wird der Druck des Prozessfluids entweder auf- oder abgebaut, so dass es zwischen den Axialenden des Turbomaschineninnengehäuses zu der wesentlichen Druckdifferenz in der Turbomaschine bzw. über die Turbomaschine kommt. Im einfachsten Fall durchströmt ein Prozessfluid die Turbomaschine ausgehend von einer Einströmung bis zu einer Abströmung. Grundsätzlich ist es auch möglich, dass Teilströme zwischendurch zugeführt oder abgezweigt werden. Bei einer Radialturbomaschine findet in jedem einzelnen Laufrad eine Umlenkung der Strömung von axial nach radial oder umgekehrt statt.

Eine mehrstufige Ausbildung im Sinne des Begriffsverständnisses dieses Dokumentes bedeutet eine Ausführung mit mehreren Laufrädern (ein Laufrad entspricht in der Begriffswelt dieses Dokumentes einer Stufe), das eine Umleitung von einer Strömungsrichtung nach radial außen in eine Strömungsrichtung nach radial innen erfolgen muss. Bei einem Verdichter muss das Prozessfluid, das das Laufrad nach radial außen strömend verlässt, die Strömungsrichtung um 180 Grad nach radial innen umgekehrt werden und dem nachfolgenden Laufrad wieder im Wesentlichen axial zugeführt werden. Zu diesem Zweck weisen Radialturbomaschinen sogenannte Rückführstufen auf. Derartige Rückführstufen sind meist beschaufelte ringförmige Kanäle, die einen Diffusor mit einer Strömungsrichtung nach radial außen aufweisen und eine 180-Grad-Umkehrung der Strömungsrichtung mit einem entsprechend ausgeführten Ringkanal vollziehen. Anschließend wird das Prozessfluid nach radial innen geführt. Der Diffusor und/oder die Rückführung nach radial innen weisen in der Regel Leitschaufeln auf, die den ohnehin schon verhältnismäßig kompliziert geformten Ringkanal in Umfangsrichtung in einzelne Strömungskanäle unterteilen. Für eine optimale Aerodynamik ist es zudem wünschenswert, die entsprechenden Leitschaufeln dreidimensional zu gestalten, so dass die geometrische Gestaltung dieser Bauteile bzw. Rückführstufen äußerst komplex ist. Eine dreidimensionale Formgebung der Rückführbeschaufelung ist gegenwärtig technisch konventionell mittels spanender Bearbeitung kaum bzw. nicht umsetzbar. Derartige Rückführstufen bzw. Turbomaschineninnengehäuse, die im Wesentlichen aus diesen Rückführstufen bestehen, sind insbesondere zum Zweck der Montage in der Regel entlang einer längsachsenparallelen Teilfuge in ein Oberteil und ein Unterteil aufgeteilt. Außerdem erfordert die konventionelle Fertigung dieser hochkomplexen Geometrie eine axiale Teilung jeder einzelnen Rückführstufe in mindestens zwei axiale Abschnitte, die in der Kombination den beschriebenen Ringkanal ausbilden. Auf diese Weise bestehen herkömmliche Turbomaschineninnengehäuse aus zwei axialen Stapeln von einzelnen Rückführstufenbauteilen, die miteinander ein Oberteil und ein Unterteil bildend ein vollständiges Turbomaschineninnengehäuse ausbilden. Dieser modulare Aufbau ist sehr aufwendig aufgrund der vielen Einzelteile und der damit erforderlichen vielen Befestigungsvorkehrungen und Dichtungsanforderungen. Darüber hinaus müssen die verschiedenen Einzelteile nicht nur zueinander abgedichtet werden, sondern auch entsprechend zueinander ausgerichtet sein. Die Fertigung der Dichtflächen und der vielen erforderlichen Zentrierungen und Befestigungen ist neben der aufwändigen Fertigung der ringförmigen Rückführstufenströmungskanäle sehr aufwändig und teuer.

Ausgehend von den oben beschriebenen Nachteilen hat es sich die Erfindung zur Aufgabe gemacht, diese Probleme zumindest teilweise zu beseitigen. Zur Lösung der erfindungsgemäßen Aufgabenstellung wird eine Anordnung mit einem Turbomaschineninnengehäuse der eingangs definierten Art mit den zusätzlichen Merkmalen des Kennzeichens des unabhängigen Anspruchs vorgeschlagen.

Begriffe, wie axial, radial, Umfangsrichtung sind, wenn dies nicht anders angegeben ist, auf eine Längsachse des Turbomaschineninnengehäuses bezogen, die zumindest parallel zu einer Rotorlängsachse einer entsprechend Radialturbomaschine ist.

Die Schilderungen in diesem Dokument beziehen sich, sofern nicht anders angegeben, auf eine Ausbildung einer erfindungsgemäß ausgestatteten Turbomaschine als Verdichter. Alternativ kann die erfindungsgemäß ausgestattete Turbomaschine auch als Expander ausgebildet sein, ohne dass dies ausdrücklich erwähnt ist. Der Fachmann ist anhand seines Fachwissens in der Lage, die vorliegenden Erläuterungen der Erfindung mutatis mutandis auch auf einen Expander anzuwenden.

Unter dem Begriff "einstückig" versteht die Erfindung ein Bauteil, das nicht zerstörungsfrei teilbar ausgebildet ist, so dass das Bauteil entweder aus einem homogenen Stück Werkstoff ausgebildet ist oder zumindest stoffschlüssig oder mindestens formschlüssig derart als eine Einheit ausgebildet ist, dass es nicht zerstörungsfrei wieder aufgeteilt werden kann.

Die einstückige Ausbildung des Oberteils und/oder des Unterteils über zumindest einen zwei Stufen übergreifenden Abschnitt des Turbomaschineninnengehäuses führt zu einer hervorragenden Versteifung dieser Struktur, weil insbesondere Leitschaufeln in den ringförmigen Kammern bzw. Strömungskanälen der Rückführstufen des Turbomaschineninnengehäuses für einen sehr belastbaren Verbund sorgen. Erfindungsgemäß handelt es sich bei den Rückführstufen um Rückführstufen, die beschaufelt ausgeführt sind bzw. Leitschaufeln aufweisen.

Jede einstückig ausgebildete Rückführstufe weist mindestens in dem nach radial innen führenden Abschnitt (Strömungsrichtung) und bevorzugt in dem radial nach außen führenden Abschnitt (Strömungsrichtung) Leitschaufeln auf.

Dementsprechend ist nicht nur aerodynamisch besonders vorteilhafte und effiziente Gestaltung sichergestellt, sondern auch eine besonders hohe Steifigkeit dieses einstückigen Abschnitts.

Erfindungsgemäß besteht das Turbomaschineninnengehäuse bis zu 50 Gew.-% aus Metall. Besonders bevorzugt besteht das Turbomaschineninnengehäuse höchstens zu 30 Gew.-% aus Metall.

Erfindungsgemäß besteht das Turbomaschineninnengehäuse mindestens zu 50 Gew.-% aus Kunststoff (sämtliche Prozentangaben sind in diesem Dokument, wenn nicht anders angegeben, auf das Gewicht bezogen). Im Vergleich zu herkömmlichen Ausbildungen von Turbomaschineninnengehäusen ermöglicht die erfindungsgemäße Ausbildung, dieses Bauteil zu großen Anteilen aus Kunststoff herzustellen, weil die Einstückigkeit für eine mechanische Steifigkeit sorgt, die ansonsten nur eine metallische Ausführung dieses Bauteils gewährleistet hätte.

Damit das Turbomaschineninnengehäuse auch hinreichend verschleißbeständig ist, ist es zweckmäßig, wenn zumindest bereichsweise die einem Prozessfluid im Betrieb ausgesetzte Oberfläche mit einer Beschichtung versehen ist, die verschleißfester ist als der mit dieser Schicht beschichtete Grundwerkstoff. Eine derartige Beschichtung kann besonders vorteilhaft zumindest teilweise aus einem Metall bestehen oder aus entsprechenden Metallstücken oder mittels Metallinlays bereitgestellt werden.

Erfindungsgemäß weist das Turbomaschineninnengehäuse mindestens zwei Rückführstufen auf, wobei das Turbomaschineninnengehäuse eine das Innere des Turbomaschineninnengehäuses definierende innere Oberfläche und eine äußere Oberfläche aufweist, wobei axial zwischen zwei Rückführstufen die äußere Oberfläche mindestens eine radial sich nach innen erstreckende Ausnehmung aufweist. Zwischen denen sich im Längsschnitt U-förmig darstellenden ringförmigen Strömungskanälen der Rückführstufen befindet sich in der Regel bei einer Radialturbomaschine axial ein Teil des Laufrades, der sich axial das Prozessfluid ansaugend nach radial umlenkend erstreckt. Insbesondere in diesem Bereich ist der radial weiter außen befindliche Axialbereich im Wesentlichen aerodynamisch funktionslos, weil sich der Ringkanal der Rückführstufen axial von der Abströmung aus dem Laufrad bis zur axialen Zuströmung zu dem darauf folgenden Laufrad erstreckt (diese Strömungsrichtungsangabe gilt für den Verdichter, für Expander ist die Strömungsrichtung umgekehrt; im folgenden wird stets ohne weiteren Hinweis bei derartigen Strömungsrichtungsangaben das Beispiel des Verdichters herangezogen). Dementsprechend ist es sinnvoll, den Axialbereich zwischen zwei Rückführstufen mit einer Ausnehmung bzw. Aussparung zu versehen, die sich nach radial innen erstreckt. Derartige Ausnehmungen reduzieren das Eigengewicht des Turbomaschineninnengehäuses in Abhängigkeit von ihrer Größe signifikant und können etwa bis auf den Außendurchmesser des Laufrades nach radial innen fortgesetzt werden. Besonders bevorzugt befindet sich der radial innere Grund der entsprechenden Ausnehmungen im Bereich des Laufradaußendurchmessers der angrenzenden Stufen plus/minus 20% des Laufradaußendurchmessers. Besonders bevorzugt erstreckt sich eine derartige Ausnehmung oder erstrecken sich Ausnehmungen dieser

Art über einen Querschnittsflächenanteil des Turbomaschineninnengehäuse von mindestens 35%. Hierbei bedeuten 100% eine angenommene Querschnittsfläche, die den Mittelwert zwischen den beiden im Bereich der axial benachbarten Laufräder des Turbomaschineninnengehäuses tatsächlich vorliegenden Querschnittsfläche ausbilden (Querschnittsfläche ist senkrecht zur Längsachse angeordnet). Bei einem zylindrischen Turbomaschineninnengehäuse beträgt der Querschnittsflächenanteil von 100% die konstante Querschnittsfläche. Ein entscheidender Vorteil derartiger Ausnehmungen liegt darin, dass ein außen anliegender Druck sich zumindest im Bereich der Ausnehmung nicht axial längenverändernd auswirkt. In der Tat kann es ohne diese Ausnehmungen je nach Steifigkeit des Turbomaschineninnengehäuses und je nach Druck zwischen dem Innengehäuse und dem Außengehäuse zu signifikanten Verformungen des Oberteils und des Unterteils des Turbomaschineninnengehäuses kommen. Dementsprechend reduzieren derartige Ausnehmungen die Anforderungen an die Steifigkeit des Turbomaschineninnengehäuses.

Besonders deutlich werden die erfindungsgemäßen Vorteile bei einer Anordnung umfassend ein Turbomaschineninnengehäuse der erfindungsgemäßen Art oder eine entsprechende Weiterbildung und ein Turbomaschinenaußengehäuse, wobei die Anordnung eine axiale Niederdruckseite und eine axiale Hochdruckseite aufweist, wobei die Anordnung eine Dichtung aufweist, die sich in Umfangsrichtung erstreckt und in einem Zwischenraum zwischen der Hochdruckseite und der Niederdruckseite angeordnet ist, derart, dass der Zwischenraum in einen Hochdruckteil und einen Niederdruckteil geteilt ist. Erfindungsgemäß ist die Anordnung derart gestaltet, dass der Hochdruckteil unter dem Enddruck der Turbomaschine im Betrieb steht und der Niederdruckteil unter dem Ansaugdruck im Betrieb steht. Hierbei ist es besonders zweckmäßig, wenn die Ausnehmungen zwischen den zwei benachbarten Rückführstufen im Bereich des Hochdruckteils angeordnet sind, so dass einerseits axial der Hochdruck zumindest teilweise kompensiert ist und andererseits die sich ergebende Kraftverteilung auf der äußeren Oberfläche des Turbomaschineninnengehäuses für eine besonders gleichmäßige Anpressung des Unterteils an das Oberteil des Turbomaschineninnengehäuses im Betrieb sorgt und dementsprechend geringere Vorkehrungen zum Zweck der Befestigung und Dichtung zwischen den beiden Bauteilen erforderlich sind.

Besonders zweckmäßig ist das Turbomaschinenaußengehäuse dieser Anordnung in Topfbauweise ausgebildet, derart, dass eine Teilfuge quer zur Längsachse vorgesehen ist. Hierbei ist es sinnvoll, wenn die Teilfuge einen Deckel von einem Topf des Turbomaschinenaußengehäuses trennt. Unter einem Deckel versteht der Fachmann hierbei einen axialen Abschluss des Topfes, der keine Ummantelungsfunktion aufweist.

Besonders zweckmäßig ist zumindest der Abschnitt des Turbomaschineninnengehäuses, der mindestens zwei Stufen übergreifend einstückig ausgebildet ist, mittels eines additiven Herstellungsverfahrens (Generatives Fertigungsverfahren bzw. Additive Fertigung) erzeugt. Entsprechende additive Herstellungsverfahren sind bereits aus WO2016/198210, WO2017/060036, WO2017/102286, WO2017/121539, WO2017/137376, WO2017/37262, WO2017/167615, WO2017/182220, WO2017/182221, WO2017/194274, WO2017/194451, WO2015/144401, WO2017/045823, WO2017/063861, WO2017/093461, WO2017/133812, WO2017/174234, WO2017/174233, WO2017/194387, WO2016/078800, WO2016/113107, WO2016/188696 und WO2017/157620 bekannt. Grundsätzlich können alle additiven Fertigungverfahren für die erfindungsgemäße Gestaltung angewendet werden: z.B. selektives Laserschmelzen (SLM), selektives Lasersintern (SLS), Selective Heat Sintering (SHS), Binder Jetting (Verfestigen von Pulvermaterial mittels Binder), Elektronenstrahlschmelzen (Electron Beam Melting = EBM), Fused Deposition Modeling (FDM oder auch Fused Filament Fabrication (FFF)), Auftragschweißen bzw. Cladding, Wax Deposition Modeling (WDM), Contour Crafting, Metall-PulverAuftragsverfahren (MPA), Kaltgasspritzen und Elektronenstrahlschmelzen (Electron Beam Welding = EBW), Stereolithografie (SLA) + Mikro-SLA, Verfahren, welche Digital Light Processing (DLP) zur Belichtung nutzen und Liquid Composite Moulding (LCM), Laminated Object Modelling (LOM), 3D-Siebdruck von Metallen und Lichtgesteuerte Elektrophoretische Abscheidung.

Ein vorteilhaft Weiterbildung der Erfindung sieht vor, dass die Aufgliederung des Turbomaschineninnengehäuse in ein bevorzugt einstückiges Unterteil und ein bevorzugt einstückiges Oberteil mit der Ausnahme eines Saugeinsatzes auf der Niederdruckseite ausgeführt ist, der bevorzugt in Umfangsrichtung ungeteilt ist und an einer im Wesentlichen axialen Teilung in einer Teilfuge SPL mit dem Unterteil LPC und dem Oberteil UPC zu dem Turbomaschineninnengehäuse TMI zusammengefügt ist. Bevorzugt an dem Saugeinsatz liegt eine Dichtung zwischen dem Turbomaschineninnengehäuse und dem Turbomaschinenaußengehäuse an, die die Hochdruckseite von der Niederdruckseite trennt. Der Saugeinsatz besteht hier vorteilhaft aus Metall, um die mechanische Last aus der Druckdifferenz aufnehmen zu können. Insbesondere zweckmäßig ist hierbei selective laser melting, electronic beam melting. Hierbei ist es besonders sinnvoll, wenn nicht nur zumindest der erwähnte Abschnitt, sondern mindestens ein ganzes Oberteil oder ein ganzes Unterteil oder sowohl Oberteil als auch Unterteil übergreifend einstückig ausgebildet sind. Dementsprechend ist die Anwendung eines additiven Herstellungsverfahrens der vorgenannten Art zweckmä-ßig für das gesamte Turbomaschineninnengehäuse anwendbar.

Im Folgenden ist die Erfindung anhand eines speziellen Ausführungsbeispiels unter Bezugnahme auf eine Zeichnung näher dargestellt. Es zeigt:

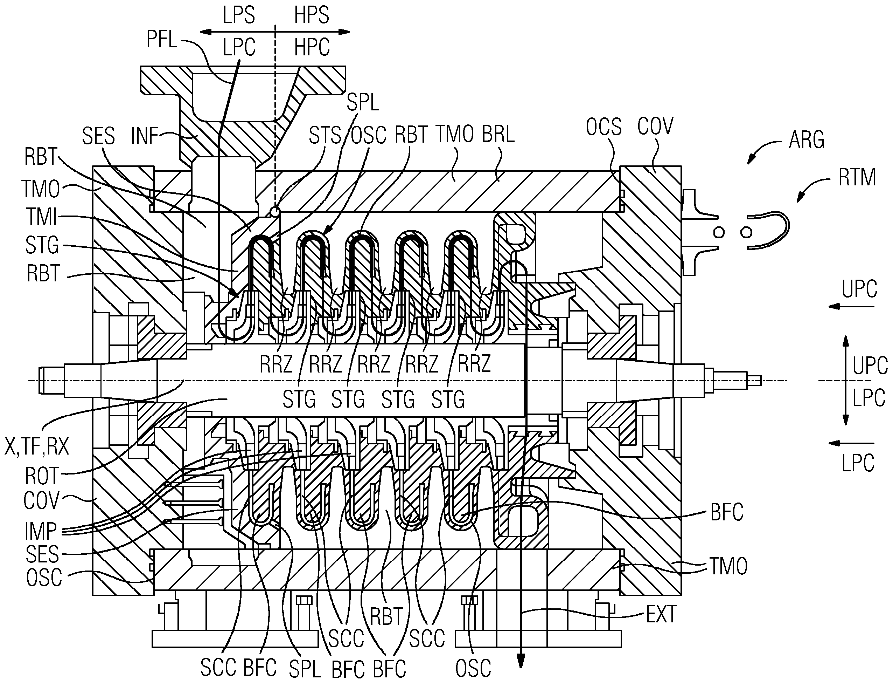

Figur 1 einen schematischen Längsschnitt durch eine Anordnung bzw. eine Radialturbomaschine mit einem erfindungsgemä-ßen Turbomaschineninnengehäuse.

Die Figur 1 zeigt eine Anordnung ARG bzw. eine Radialturbomaschine RTM mit einem erfindungsgemäßen Turbomaschineninnengehäuse TMI. Das Turbomaschineninnengehäuse TMI ist umgeben von einem Turbomaschinenaußengehäuse TMO, das von einem Prozessgas PFL von einer Einströmung IMF bis zu einer Abströmung EXT durchströmt wird. In dem konkreten Ausführungsbeispiel eines Radialturboverdichters wird dem Prozessfluid PFL ein höherer Druck beim Durchströmen des Turbomaschineninnengehäuses TMI mittels Laufrädern IMP, die Bestandteil eines um eine Längsachse X bzw. Rotorachse RX rotierenden Rotors ROT sind, aufgeprägt. Hierbei ist das Turbomaschineninnengehäuse TMI ein statisches, insbesondere aerodynamisch wirkendes Bauelement und der Rotor ROT mit den Laufrädern IMP bringt technische Arbeit von einem nicht näher dargestellten äußeren Antrieb in das Prozessfluid PFL ein. Zum Zwecke des Anschlusses eines Antriebes ist das linksseitige Wellenende, ebenso wie das rechtsseitige Wellenende des Rotors axial an einer Durchtrittsöffnung aus dem Außengehäuse TMO herausgeführt. Die entsprechenden Wellendurchtritte sind mittels einer nicht näher erläuterten Wellendichtung abgedichtet gegenüber der Druckdifferenz zwischen dem Prozessfluid im Inneren des Au-ßengehäuses TMO und der Umgebung.

Das Turbomaschineninnengehäuse TMI empfängt das Prozessfluid PFL im Turbomaschinenaußengehäuse TMO im Bereich eines Zwischenraums RBT. Der Zwischenraum RBT ist unterteilt in eine Hochdruckseite HPS und eine Niederdruckseite LPS mittels einer Dichtung STS zwischen dem Turbomaschineninnengehäuse TMI und dem Turbomaschinenaußengehäuse TMO. Die Dichtung STS verläuft in Umfangsrichtung (zur Längsachse X bzw. Rotorachse RX) und trennt einen axialen Hochdruckteil HPC des Zwischenraums RBT von einem axialen Niederdruckteil LPC. Die Einströmung IMF des Turbomaschinenaußengehäuses TMO mündet in den Niederdruckteil LPC ein und die Abströmung EXT steht fluidleitend in Verbindung mit dem Hochdruckteil HPC. Die Dichtung STS ist derart axial anliegend ausgebildet, so dass im Betrieb der höhere Druck im Hochdruckteil HPC das Turbomaschineninnengehäuse TMI in Richtung des Niederdruckteils LPC schiebt und dementsprechend eine vollumfängliche Anlage die Dichtigkeit der Dichtung STS gewährleistet.

Die abgebildete Radialturbomaschine RTM weist sechs Laufräder auf und damit auch im erfindungsgemäßen Begriffsverständnis sechs Stufen STG bzw. Verdichtungsstufen. Zwischen zwei Stufen ist jeweils eine sogenannte Rückführstufe BFC im Turbomaschineninnengehäuse TMI ausgebildet. Die Rückführstufe empfängt von dem stromaufwärts befindlichen Laufrad IMP das nach radial außen strömende Prozessfluid PFL. In dem zunächst als Diffusor wirkenden Abschnitt der Rückführstufe BFC wird das Prozessfluid verzögert und mit dort vorgesehenen Leitschaufeln von ungewünschten Drallkomponenten weitestgehend befreit. Im stromabwärtig befindlichen Abschnitt des Ringkanals der Rückführstufe BFC wird das Prozessfluid um 180° nach radial innen umgelenkt und anschließend weiter nach radial innen durch einen leitbeschaufelten Abschnitt geführt. Stromabwärts erfolgt eine 90-Grad-Umlenkung in Axialrichtung zum stromaufwärtig befindlichen nächsten Laufrad IMP. In dem konkreten Ausführungsbeispiel ist das Turbomaschineninnengehäuse TMI als eine Zusammenstellung aus einem einstückigen Unterteil LPC und einstückigen Oberteil UPC mit einer Teilfuge entlang einer Längsachse X ausgebildet. Z |' Erfindungsgemäß, können Oberteil UPC und Unterteil LPC des Turbomaschineninnengehäuses auch nur abschnittsweise zumindest zwei Stufen übergreifend einstückig ausgebildet sein und dies auch nur für das Unterteil LPC oder das Oberteil UPC. Hierzu bedarf es keiner weiteren Illustration.

In dem konkreten Ausführungsbeispiel ist die Aufgliederung des Turbomaschineninnengehäuse TMI in ein Unterteil LPC und ein Oberteil UPC mit der Ausnahme eines Saugeinsatzes SES ausgeführt, der in Umfangsrichtung ungeteilt mittels einer im Wesentlichen axialen Teilung in einer Teilfuge SPL mit dem Unterteil LPC und dem Oberteil UPC zu dem Turbomaschineninnengehäuse TMI zusammengefügt ist. An dem Saugeinsatz SES liegt die Dichtung STS an, die die Hochdruckseite HPS von der Niederdruckseite LPS trennt. Der Saugeinsatz SES besteht hier vorteilhaft aus Metall, um die mechanische Last aus der Druckdifferenz aufnehmen zu können.

Das Turbomaschineninnengehäuse TMI besteht bis zu 50 Gew.-% aus Metall, bevorzugt bis zu 30 Gew.-%. Das Turbomaschineninnengehäuse ist zu 50 Gew.-% oder mehr aus Kunststoff ausgebildet. Bereichsweise ist das Turbomaschineninnengehäuse an Oberflächen, die im Betrieb dem Prozessfluid PFL ausgesetzt sind, mit einer Beschichtung SCC versehen. Diese Beschichtung besteht zumindest teilweise aus Metall.

Das Turbomaschineninnengehäuse definiert eine innere Oberfläche ISC und eine äußere Oberfläche OSC. Axial zwischen zwei Rückführstufen BFC ist die äußere Oberfläche OSC jeweils mittels einer radial sich nach innen erstreckenden Ausnehmung RRZ versehen. Diese Ausnehmung RRZ erreicht einen Querschnittsflächenanteil des Turbomaschineninnengehäuses TMI von mindestens 35%. Dementsprechend wirkt bei Betrieb der Enddruck der Hochdruckseite HPS auch im Bereich dieser Ausnehmungen RRZ und sorgt einerseits für eine geringere axiale komprimierende Kraft auf das Turbomaschineninnengehäuse TMI und andererseits für eine nur geringe daraus resultierende Verformung und gleichmäßige Anlage einer Dichtfläche zwischen dem Oberteil UPC und dem Unterteil LPC. Eine axiale Versteifung des Oberteils UPC und des Unterteils LPC wird mittels Rippen in den Ausnehmungen RRZ erreicht, die sich im Wesentlichen in axialer-radialer Richtung flächig erstrecken.

Der Druck im Betrieb in den einzelnen Ausnehmungen im Bereich der äußeren Oberfläche OSC ist in der Regel geringer als der Enddruck auf der Hochdruckseite HPS. Aufgrund der filigranen Kontur im Bereich der äußeren Oberfläche OSC wirkt dieser Betriebsdruck derart, dass die Teilfuge TF zwischen dem Oberteil UPC und dem Unterteil LPC zusammengedrückt wird, so dass interne Leckagen verhindert werden. Bei einem konventionellen metallischen Gehäuse sind die Fugenbereiche dickwandig mit fertigungsbedingten verbleibenden Spalten, die zu internen Leckagen führen.

Das Turbomaschinenaußengehäuse TMO ist in Topfbauweise ausgebildet, derart, dass eine Teilfuge OCS auf beiden Seiten jeweils quer zur Längsachse X vorgesehen ist. Axial auf beiden Seiten bildet ein Deckel COV einen axialen Abschluss eines Topfes BRL des Turbomaschinenaußengehäuses TMO. Der Deckel hat keine Ummantelungsfunktion und bildet lediglich den axialen Abschluss.

Das Turbomaschineninnengehäuse TMI ist mittels eines additiven Herstellungsverfahrens erzeugt worden zumindest in dem Bereich, der mindestens zwei Stufen übergreifend einstückig ausgebildet ist.

## Patentansprüche

1. Anordnung (ARG) umfassend ein Turbomaschineninnengehäuse (TMI), für eine Radialturbomaschine (RTM),
wobei das Turbomaschineninnengehäuse (TMI) eine Teilfuge (TF) entlang einer Längsachse (X), insbesondere einer Rotorlängsachse (RX) aufweist, derart, dass das Turbomaschineninnengehäuse (TMI) in ein Unterteil (LPC) und ein Oberteil (UPC) aufteilbar ist,
wobei das Turbomaschineninnengehäuse (TMI) für eine mindestens zwei Stufen (STG) umfassende Radialturbomaschine (RTM) ausgebildet ist,
wobei das Turbomaschineninnengehäuse (TMI) zwischen zwei Stufen (STG) jeweils eine Rückführstufe (BFC) aufweist,
wobei die Rückführstufe (BFC) derart ausgebildet ist, dass innerhalb des Turbomaschineninnengehäuses (TMI) im stromabwärtig befindlichen Abschnitt des Ringkanals der Rückführstufe (BFC) das Prozessfluid um 180° nach radial innen umgelenkt wird und anschließend weiter nach radial innen durch einen leitbeschaufelten Abschnitt geführt wird, wobei stromabwärts eine 90°-Umlenkung in Axialrichtung zum stromaufwärtig befindlichen nächsten Laufrad (IMP) erfolgt,
wobei das
Unterteil (LPC) und/oder das Oberteil (UPC) zumindest abschnittsweise mindestens zwei Stufen (STG) übergreifend einstückig ausgebildet ist,
wobei das Turbomaschineninnengehäuse (TMI) mindestens zwei Rückführstufen (BFC) aufweist,
wobei das Turbomaschineninnengehäuse (TMI) eine das Innere des Turbomaschineninnengehäuse (TMI) definierende innere Oberfläche (ISC) und eine äußere Oberfläche (OSC) aufweist, wobei axial zwischen zwei Rückführstufen (BFC) die äußere Oberfläche (OSC) mindestens eine radial sich nach innen erstreckende Ausnehmung (RRZ) aufweist,
wobei die Anordnung (ARG) ferner ein das Turbomaschineninnengehäuse (TMI) umgebendes Turbomaschinenaußengehäuse (TMO) umfasst, wobei die Anordnung (ARG) eine axiale Niederdruckseite (LPS) und eine axiale Hochdruckseite (HPS) aufweist, wobei die Anordnung (ARG) eine Dichtung (STS) aufweist, die sich in Umfangsrichtung erstreckt und in einem Zwischenraum (RBT) zwischen der Hochdruckseite (HPS) und der Niederdruckseite (LPS) angeordnet ist, derart, dass der Zwischenraum (RBT) in einen Hochdruckteil (HPC) und einen Niederdruckteil (LPC) geteilt ist,
wobei im Betrieb der Hochdruckteil (HPC) unter einem Enddruck der Turbomaschine und der Niederdruckteil (LPC) unter einem Ansaugdruck steht,
wobei die Ausnehmungen (RRZ) jeweils zwischen den mindestens zwei benachbarten Rückführstufen (BFC) und im Bereich des Hochdruckteils (HPC) angeordnet sind,
wobei das Turbomaschineninnengehäuse (TMI) bis zu 50% Gew.-% aus Metall und zu mindestens 50 Gew.-% aus Kunststoff besteht.

2. Anordnung nach Anspruch 1, wobei zumindest bereichsweise die einem Prozessfluid im Betrieb ausgesetzte Oberfläche mit einer Beschichtung (SCC) versehen ist.

3. Anordnung nach Anspruch 2 ,
wobei die Beschichtung (SCC) zumindest teilweise aus einem Metall besteht.

4. Anordnung nach Anspruch 1,
wobei die Ausnehmung (RRZ) oder Ausnehmungen (RRZ) sich über einen Querschnittsflächenanteil des Turbomaschineninnengehäuses (TMI) von mindestens 35% erstrecken.

5. Anordnung (ARG) nach einem der vorhergehenden Ansprüche, wobei das Turbomaschinenaußengehäuse (TMO) in Topfbauweise ausgebildet ist, derart, dass eine Teilfuge (OCS) quer zur Längsachse (X) vorgesehen ist.

6. Anordnung (ARG) nach Anspruch 5, wobei die Teilfuge (OCS) einen Deckel (COV) von einem Topf (BRL) des Turbomaschinenau-ßengehäuses (TMO) trennt.

7. Anordnung nach einem der vorhergehenden Ansprüche, wobei zumindest der Abschnitt, der mindestens zwei Stufen (STG) übergreifend einstückig ausgebildet ist, mittels eines additiven Herstellungsverfahrens erzeugt ist.

## Claims

1. Arrangement (ARG) comprising a turbomachine inner housing (TMI), for a radial turbomachine (RTM),
wherein the turbomachine inner housing (TMI) has a dividing line (TF) along a longitudinal axis (X), in particular a rotor longitudinal axis (RX), such that the turbomachine inner housing (TMI) can be divided into a lower part (LPC) and an upper part (UPC),
wherein the turbomachine inner housing (TMI) is designed for a radial turbomachine (RTM) comprising at least two stages (STG), wherein the turbomachine inner housing (TMI) has a return stage (BFC) between each two stages (STG),
wherein the return stage (BFC) is designed in such a way, that within the turbomachine inner housing (TMI) in the downstream section of the annular channel of the return stage (BFC), the process fluid is deflected by 180° radially inwards and then guided further radially inwards through a guide-bladed section, whereby a 90° deflection in the downstream axial direction to the next upstream impeller (IMP) takes place,
the lower part (LPC) and/or the upper part (UPC) are/is formed in one piece, spanning at least two stages (STG) at least in some sections,
wherein the turbomachine inner housing (TMI) has at least two return stages (BFC),
wherein the turbomachine inner housing (TMI) has an inner surface (ISC) defining the inside of the turbomachine inner housing (TMI) and an outer surface (OSC), wherein the outer surface (OSC) has at least one recess (RRZ) extending radially inwards axially between two return stages (BFC),
wherein the arrangement (ARG) furthermore comprises a turbomachine outer housing (TMO) surrounding the turbomachine inner housing (TMI), wherein the arrangement (ARG) has an axial low pressure side (LPS) and an axial high pressure side (HPS), wherein the arrangement (ARG) has a seal (STS), which extends in the circumferential direction and is arranged in a space (RBT) between the high pressure side (HPS) and the low pressure side (LPS) in such a manner that the space (RBT) is divided into a high pressure part (HPC) and a low pressure part (LPC), wherein the high-pressure part (HPC) is operating under a final pressure of the turbomachine, and the low-pressure part (LPC) is operating under an intake pressure,
wherein the recesses (RRZ) are in each case arranged between the at least two adjacent return stages (BFC) and in the region of the high-pressure part (HPC),
wherein the turbomachine inner housing (TMI) consists of up to 50% by weight of metal and at least 50% by weight of plastic.

2. Arrangement according to Claim 1, wherein the surface which is exposed to a process fluid during operation is provided with a coating (SCC), at least in some regions.

3. Arrangement according to Claim 2,
the coating (SCC) consisting at least partially of a metal.

4. Arrangement according to Claim 1,
wherein the recess (RRZ) or recesses (RRZ) extend over a cross-sectional area portion of the turbomachine inner housing (TMI) of at least 35%.

5. Arrangement (ARG) according to one of the preceding claims, wherein the turbomachine outer housing (TMO) is formed in a barrel design in such a manner that a dividing line (OCS) is provided transversely to the longitudinal axis (X).

6. Arrangement (ARG) according to Claim 5, wherein the dividing line (OCS) separates a cover (COV) from a barrel (BRL) of the turbomachine outer housing (TMO).

7. Arrangement according to one of the preceding claims, wherein at least the section which is formed in one piece, spanning at least two stages (STG), is produced by means of an additive manufacturing method.

## Revendications

1. Agencement (ARG) comprenant une enveloppe (TMI) intérieure de turbomachine, pour une turbomachine (RTM) radiale,
dans lequel l'enveloppe (TMI) intérieure de turbomachine a un joint (TF) le long d'un axe (X) longitudinal, en particulier d'un axe (RX) longitudinal de rotor, de manière à ce que l'enveloppe (TMI) intérieure de turbomachine puisse être subdivisée en une partie (LPC) inférieure et en une partie (UPC) supérieure,
dans lequel l'enveloppe (TMI) intérieure de turbomachine est constituée pour une turbomachine (RTM) radiale comprenant au moins deux étages (STG),
dans lequel l'enveloppe (TMI) intérieure de turbomachine a respectivement un étage (BFC) de retour entre deux étages (STG), dans lequel l'étage (BFC) de retour est constitué de manière à ce que, à l'intérieur de l'enveloppe (TMI) intérieure de turbomachine dans la partie se trouvant en aval du conduit annulaire de l'étage (BFC) de retour, le fluide de processus soit dévié de 180° vers l'intérieur radialement et soit ensuite guidé davantage vers l'intérieur radialement par une partie pourvue d'aubes directrices, dans lequel, en aval, a lieu une déviation à 90° dans la direction axiale par rapport à la roue (IMP) à aubes la plus proche se trouvant en amont,
dans lequel la partie (LPC) inférieure et/ou la partie (UPC) supérieure est constituée d'une seule pièce enjambant au moins par endroits au moins deux étages (STG),
dans lequel l'enveloppe (TMI) intérieure de turbomachine a au moins deux étages (BFC) de retour,
dans lequel l'enveloppe (TMI) intérieure de turbomachine a une surface (ISC) intérieure définissant l'intérieur de l'enveloppe (TMI) intérieure de turbomachine et une surface (OSC) extérieure, dans lequel, axialement entre deux étages (BFC) de retour, la surface (OSC) extérieure a au moins un évidement (RRZ) s'étendant radialement vers l'intérieur,
dans lequel l'agencement (ARG) comprend en outre une enveloppe (TMO) extérieure de turbomachine entourant l'enveloppe (TMI) intérieure de turbomachine, dans lequel l'agencement (ARG) a un côté (LPS) axial de basse pression et un côté (HPS) axial de haute pression, dans lequel l'agencement (ARG) a une étanchéité (STS), qui s'étend dans la direction périphérique et est disposée dans un espace (RBT) intermédiaire entre le côté (HPS) de haute pression et le côté (LPS) de basse pression, de manière à ce que l'espace (RBT) intermédiaire soit subdivisé en une partie (HPC) de haute pression et en une partie (LPC) de basse pression,
dans lequel, en fonctionnement, la partie (HPC) de haute pression est sous une pression finale de la turbomachine et la partie (LPC) de basse pression sous une pression d'aspiration,
dans lequel les évidements (RRZ) sont disposés respectivement entre les au moins deux étages (BFC) de retour voisins et dans la région de la partie (HPC) de haute pression,
dans lequel l'enveloppe (TMI) intérieure de turbomachine est constituée jusqu'à 50 % en poids de métal et, pour au moins 50 % en poids, de matière plastique.

2. Agencement suivant la revendication 1,
dans lequel, au moins par endroits, la surface soumise en fonctionnement au fluide de processus est pourvue d'un revêtement (SCC).

3. Agencement suivant la revendication 2,
dans lequel le revêtement (SCC) est constitué au moins en partie d'un métal.

4. Agencement suivant la revendication 1,
dans lequel l'évidement (RRZ) ou les évidements (RRZ) s'étendent sur une proportion de surface en section transversale de l'enveloppe (TMI) intérieure de turbomachine d'au moins 35 %.

5. Agencement (ARG) suivant l'une des revendications précédentes,
dans lequel l'enveloppe (TMO) extérieure de turbomachine est constituée en mode de construction en pot, de manière à prévoir un joint (OCS) transversalement à l'axe (X) longitudinal.

6. Agencement (ARG) suivant la revendication 5,
dans lequel le joint (OCS) sépare un couvercle (COV) d'un pot (BRL) de l'enveloppe (TMO) extérieure de turbomachine.

7. Agencement suivant l'une des revendications précédentes, dans lequel au moins la partie, qui est constituée d'une seule pièce en enjambant au moins deux étages (STG), est produite au moyen d'un procédé de fabrication additive.
